# EUROPEAN PATENT APPLICATION

(11) **EP 4 786 637 A1**
(43) Date of publication of application: **05.08.2026**
(21) Application number: 26154340.9
(22) Date of filing: 27.01.2026
(51) Int. Cl.: C23C 18/16, C08K 3/04, C25D 5/56

(54) **METALLIZATION METHOD FOR POLYMERIC SUBSTRATES**

(30) Priority: 29.01.2025 EP 25154627; 06.10.2025 IT 202500025816
(71) Applicant: Thales Alenia Space Italia S.p.A. Con Unico Socio, 00131 Roma (IT)
(72) Inventor: Mirko, ROCCI, 00131 Roma (IT)
(74) Representative: Studio Torta S.p.A.

(57) **Abstract**

A metallization method for polymeric substrates, comprising: (i) a mixing step, in which a polymeric compound is mixed with a graphene- and/or carbon nanotubes-based filler to obtain a conductive polymeric material comprising from 1 to 40% by weight of graphene- and/or carbon nanotubes-based filler; (ii) a forming step, in which the conductive polymeric material is molded into a shape of the polymeric substrate to be metallized; (iii) a plating step, in which the conductive polymeric substrate is subjected to electrochemical deposition or chemical plating.

## Description

### CROSS-REFERENCE TO RELATED APPLICATIONS

This patent application claims priority from European patent application no. 25154627.1 filed on January 29, 2025, and from Italian patent application no. 102025000025816 filed on October 6, 2025, the entire disclosure of which is incorporated herein by reference.

### TECHNICAL FIELD

The present invention relates to a metallization method for polymeric substrates, wherein the doping of the polymeric substrate with conductive micro- and nanomaterials is provided.

### STATE OF THE ART

As is known, the aerospace, automotive, electronics and biomedical industries have long been seeking to replace components made of metal with lighter ones, without thereby compromising the functional metallic properties thereof.

A solution which has been long investigated relates to the metallization of substrates made of polymeric material. In this manner, it would be possible to exploit the lightness of the polymeric material while maintaining the metallic properties thanks to the presence of the metallic surface layer resulting from the metallization.

Generally, traditional metallization methods for polymers have a series of disadvantages, such as the need for complex multi-step chemical and physical treatments, high energy consumption, or limited applicability to large/free-form parts.

Furthermore, direct polymer-to-metal bonding methods (adhesive bonding, injection overmolding, melt bonding) require high temperatures or large-scale facilities which are not suitable for highly complex parts or temperature-sensitive polymeric materials.

In order to correctly evaluate the advantages of the method constituting the object of the present invention compared to the prior art, the disadvantages related to the metallization methods currently in use are analyzed below.

Prior art methods can be divided into four broad categories: physical vapour deposition (PVD), electroplating or electroless plating, thermal spraying methods, and direct polymer-to-metal bonding approaches (including adhesive bonding, injection overmolding, and melt bonding). Indeed, despite progressive improvements, each of the above techniques has intrinsic limitations or environmental constraints that cause technical issues when polymers are metallized on a large scale or in a complex manner.

Physical vapour deposition (PVD) has disadvantages related to the difficulty of obtaining a uniform coating on free-form or large parts (especially in recessed or hidden areas) and the need to use plasma pretreatments (Ar, O₂) or primer coatings to obtain strong adhesion between metal and polymer. Furthermore, this technique requires vacuum chambers, which can be expensive and limited in size (not ideal for very large or complex polymeric components), and involves high energy consumption as well as the need for specialized facilities (clean rooms, vacuum pumps, etc.) which necessarily increase the costs for mass production.

Electroplating, or electroless plating, suffers from the disadvantages related to the need for a multi-step chemical etching performed with toxic chemicals which produce hazardous waste, and the difficulty to apply it on high-performance polymers, such as the PAEK family.

Thermal spraying processes (flame spraying, arc spraying, plasma spraying, cold spraying) suffer from the disadvantages related to the fact that most polymers are unable to withstand the high local temperatures generated by plasma jets, or molten particles, without deforming or degrading. Furthermore, thermal spraying processes have disadvantages related to the complexity of adjusting the parameters (separation distance, gas temperature, filler composition) and of the equipment used to ensure a pore-free or oxide-free coating and integrity of the polymeric substrate.

Finally, direct polymer-to-metal bonding methods suffer from the disadvantage of being very time-consuming, besides requiring extensive non-destructive inspections (e.g., X-ray, ultrasound). Furthermore, these methods use expensive equipment, and preheating metals to high temperatures can cause voids or incomplete penetration of the fiber-reinforced polymers. Finally, bonded areas are often limited to specific joints or overlaps, rather than providing a uniform conductive coating on complex shapes.

From the above it is apparent that the prior art solutions for the metallization of polymeric substrates have technical, environmental and production disadvantages resulting from the high manufacturing costs.

The need was therefore felt for a metallization method capable of ensuring the use of polymers in electrically or thermally demanding (aerospace, automotive, electronics, marine, biomedical) applications.

### DESCRIPTION OF THE INVENTION

The object of the present invention is a metallization method for polymeric substrates, comprising: (i) a mixing step, in which a polymeric compound is mixed with a graphene- and/or carbon nanotubes-based filler to obtain a conductive polymeric material comprising from 1 to 40% by weight of said graphene- and/or carbon nanotubes-based filler; (ii) a forming step, in which said conductive polymeric material is molded into a shape of the polymeric substrate to be metallized; (iii) a plating step, in which said conductive polymeric substrate is subjected to electrochemical deposition or chemical plating.

Preferably, said mixing step comprises an operation selected from the group consisting of melt compounding, solution mixing, and ultrasonic mixing.

Preferably, said forming step includes an operation selected from the group consisting of injection molding, extrusion, and 3D printing.

Preferably, the graphene- and/or carbon nanotubes-based filler is selected from the group consisting of few-layer graphene, graphite/graphene nanoplatelets (GNPs), reduced graphene oxide (rGO), and single-wall (SWCNTs) and multi-wall (MWCNTs) carbon nanotubes.

Preferably, the graphene-based filler has lateral dimensions between 0.5 and 100 µm and thicknesses between 1 and 10 atomic layers (few-layer graphene), and up to 100 nm (graphene nanoplatelets).

Preferably, the carbon nanotubes-based filler has lengths between 0.5 and 200 µm.

Preferably, the polymeric material is selected from the group consisting of acrylonitrile-butadiene-styrene (ABS), polycarbonate (PC), polyamides (PA), polyether ether ketone (PEEK) and polyarylether ketones (PAEK), polyetherimide (PEI).

Preferably, the metallization method comprises a pretreatment step interposed between said forming step and said plating step; said pretreatment step comprising an operation selected from the group consisting of mechanical cleaning, solvent rinsing, and water rinsing.

Preferably, the metallization method comprises a post-plating treatment step comprising an operation selected from the group consisting of thermal or cold spray coatings, electropolishing, passivation.

### PREFERRED EMBODIMENT OF THE INVENTION

The metallization method constituting the object of the present invention entails the combination of (a) a mixing step, in which a polymeric material is mixed with a graphene- and/or carbon nanotubes-based filler to impart conductivity characteristics to the polymeric material; (b) a forming step, in which a desired shape is imparted to the polymeric material made conductive ; and (c) a plating step, in which the conductive polymeric substrate made in the forming step is subjected to electrochemical deposition or chemical plating.

Optionally, the metallization method further comprises the surface pretreatment steps performed on the substrate obtained from the forming step, and a post-plating step performed downstream of the plating step in order to impart to the already plated surface particular functional and/or aesthetic characteristics.

In particular, the surface pretreatment step involves operations related to mechanical cleaning and/or solvent rinsing and/or water rinsing, which do not have the invasiveness of the chemical treatments (cleaning, etching, rinsing, activation, acceleration, etc.) typical of the metallization methods of the prior art.

The metallization method constituting the object of the present invention is based on an innovative approach related to the mass doping of a polymeric material with graphene-based and/or carbon nanotubes-based fillers, in order to obtain inside the entire substrate a uniform and stable electrical conductivity throughout the polymer and not only on the surface.

Such an approach departs from traditional surface-only treatments, such as multi-step etching or primer deposition, and integrates instead the conductive phase in the entire polymer volume.

It should also be considered that, compared to a solution related to the coupling onto the substrate of a polymeric surface layer made conductive, the solution of the present invention has advantages in terms of improved electrical, thermal and solidity properties. The criticalities in terms of fracture and fragility resulting precisely from the presence of a connection interface between the substrate and the conductive surface polymeric layer are, indeed, avoided.

Graphene- and/or carbon nanotubes-derived fillers (e.g., few-layer graphene, graphite/graphene nanoplatelets (GNPs), reduced graphene oxide (rGO), and/or carbon nanotubes) form percolating networks within the polymeric matrix, thus providing sufficient electrical conductivity to enable direct electroplating.

Thanks to the mixing techniques, such as twin-screw extrusion or ultrasonication, it is possible to obtain uniform and reliable conductivity on complex polymeric morphologies. It is thereby possible to use a wide range of polymer families, comprising lower-performance materials such as ABS or polycarbonate, as well as higher-performance resins such as PEEK, etc., and high-temperature polyamides.

Once it has been made conductive by means of the addition of graphene- and/or carbon nanotubes-derived fillers, the polymeric material is processed using forming methods, such as injection molding, extrusion, thermoforming or additive manufacturing (3D printing). Such a freedom in terms of forming considerably expands design possibilities, enabling the prototyping or the creation of complex structures (e.g., lattice fillings and internal channels) that might be impossible or expensive to process with metal.

During these forming processes, the polymer maintains its doped nature and the conductive network remains intact. An essential advantage is that no specialized modifications to standard molding or printing hardware are required. The invention perfectly integrates into existing plastic production lines.

Next, after the piece has been formed, a light cleaning by means of the surface pretreatment step (e.g., with a solvent or mild detergent) will be sufficient to remove any contaminants from the surface.

Once it has assumed the final shape by means of the forming step, the polymeric substrate is directly metallized using standard galvanizing or low-temperature chemical plating baths. The sophisticated chemical activation or vacuum pretreatment steps typical of the prior art are thereby eliminated, resulting in advantages in terms of environmental sustainability, cost efficiency, productivity, and compatibility with high-quality polymers.

The electrodeposition or chemical plating techniques provided in the metallization method constituting the object of the present invention are standard techniques and are known to the person skilled in the art. From the above it is clear that the manufacturing specifications of the electrodeposition or chemical plating techniques will be defined by the person skilled in the art according to their own knowledge and experience and do not constitute characterizing features of the metallization method of the present invention.

Finally, the newly formed conductive polymeric substrate is directly introduced into a standard galvanizing bath, allowing widely used plating solutions, such as copper sulfate, nickel sulfate, or gold- and chromium-based systems, to be used without having to make significant modifications to existing plating lines.

The metallization method of the present invention, thanks to the presence of a conductive network in the entire polymer volume, ensures uniform conductivity, resulting in a more uniform distribution of the plating current. This contributes to minimizing the well-known problem of "shadow areas" or uneven thickness in deep recesses or complex curvatures.

Furthermore, the risk of sudden delamination is mitigated by a more coherent electrodeposition process.

It has been demonstrated that, when a polymeric substrate is conductive from the very beginning, the initial nucleation of metal ions on the surface is less subject to local variations in the charge density. This uniform "metal seeding" process promotes a continuous coating with fewer pores or weak spots and ultimately leads to a stronger metal-polymer interface.

In order to better understand the invention, an example embodiment is provided below for illustrative and nonlimiting purposes.

The example set out below concerns the production of PEEK/FLG platelets (23% by weight) injection-molded and copper-plated by direct electrodeposition.

In particular, flat PEEK specimens loaded with 23 wt% Few-Layer Graphene (FLG) (BeDimensional G-LEAF) were prepared by injection molding to verify the surface electrical conductivity thereof and demonstrate the possibility of performing direct electroplating (in this case, direct galvanic copper plating) from an acidic copper bath, without resorting to advanced surface activations (e.g., plasma, electroless, etc., activation).

The specifications of materials and equipment used are set out below:
- Polymer: commercial granular PEEK, injection molding grade, provided by Victrex.
- Charge: industrial few-layer graphene (FLG) produced by BeDimensional (G-LEAF).
- Detergents: isopropyl alcohol or ethanol ≥99,5%, deionized water (<5 µS/cm).
- Alkaline degreaser (soaking): Na₂CO₃ 20 g/L + Na₃PO₄ 15 g/L.
- Acidic predip: H₂SO₄ 2% v/v in H₂O DI.
- Acidic copper bath: CuSO₄·5H₂O 200 g/L, H₂SO₄ 60-70 g/L, Cl⁻ 50-90 ppm.
- Anodes: phosphor copper.
- Maskings: PTFE tape for the contact area.
- Co-rotating twin-screw extruder Ø 27-30 mm, L/D ≈ 40, with side-feeder and vacuum vent.
- Injection press (cylinder up to 390°C, mold at 200°C).
- US tank.
- PVC galvanic tank with DC rectifier 0-30 A, air/paddle stirring and temperature control.
- XRF for thickness measurements.

### A) Mixing step (PEEK + 23% FLG)

The PEEK polymer was subjected to a drying operation by maintaining it for 3h at a temperature of 150°C under vacuum conditions. Unlike what set out above, the drying operation can be carried out under dry air conditions.

The PEEK polymer from the drying operation was mixed with FLG according to a weight ratio of 77 g PEEK : 23 g FLG. The mixing was performed in an extruder under the following conditions:
T profile (°C): 320 / 340 / 360 / 370 / 375 / 380.
Screw turns 200-250 rpm.
FLG introduced in the side-feeder ~6D.
Active vacuum (-0.8 bar).
Strands obtained from the extruder were cooled in water, cut to 3-4 mm, and then dried again at 150°C × 3 h.

The strands are quite homogeneous, opaque black, without any evident agglomeration.

### B) Forming step.

The forming step was carried out by injection molding, obtaining a platelet having 80 × 20 × 2 mm dimensions.

The molding machine parameters are set out below:
Cylinder: 355-385°C (progressive zones).
Nozzle: 375-385°C.
Mold: 175-190°C.
Injection pressure: 150 MPa; maintained at 80 MPa × 10 s.
Cooling: 60 s; ~95 s cycle.

The platelet thus obtained was a solid piece without any remarkable visual defects and was subjected to a conditioning operation at 23°C for 24 h under 50% RH conditions.

Next, the platelet was evaluated in terms of electrical characteristics, finding a value of 7-30 Ω/sq (over 2 mm). This value was considered suitable for triggering the galvanic copper plating.

In particular, to improve the contact of the electrical terminal, a light abrasion with 1200 grit paper and a cleaning with isopropyl alcohol were performed at the contact area.

### C) Pretreatment step (optional)

The platelet obtained from the forming step was subjected to neutral washing in a US tank with 2% detergent for 5 mins at a temperature of 35-40°C followed by rinsing with deionized water. Furthermore, standard washing in isopropanol or ethanol and drying with a dry air gun or industrial nitrogen were performed.

Next, the platelet was subjected to a degreasing operation by means of an aqueous solution of Na₂CO₃ 20 g/L + Na₃PO₄ 15 g/L, at a temperature of 50-55°C for 3 mins, followed by rinsing with deionized water.

Finally, the platelet was subjected to the action of a H₂SO₄ 2% v/v aqueous solution for 30-60 s at room temperature, followed by rinsing with deionized water.

In view of the foregoing, it is clear that no plasma treatment or noble activation was used.

It has been verified that the conductivity and surface wettability of the platelet were suitable for direct electrodeposition.

### D) Plating step.

The plating step was performed by galvanic copper plating. A bath was used, having the composition CuSO₄·5H₂O 200 g/L; H₂SO₄ 65 g/L; Cl⁻ 70 ppm; additives 1.5 mL/L.

The bath had a temperature of 23°C and was subjected to stirring by the action of light diffused air.

The platelet was arranged in a vertical position at a distance of 60 mm from the phosphor copper anode.

The nucleation was performed with a current of 0.2 A/dm² maintained for 2-3 mins, while the growth was performed by increasing the current up to 1.5 A/dm² in 2 mins and maintaining the same for 50-55 mins.

Next, the platelet was rinsed with deionized water and dried by blowing and drying at 80°C for 10 mins.

Once the plating step had been carried out, analyses were carried out relating to the metallization layer obtained in terms of thickness, adhesion and electrical resistance.

By five-point FTIR analyses, a thickness of 19-21 µm was measured with a uniformity of ±6%. Furthermore, as a further check, some thickness measurements were carried out by means of a scanning electron microscope (SEM) on micro cross-sections of the specimens, which confirmed the thicknesses measured by FTIR.

The adhesion tests were performed by the peeling test according to the ASTM D3359 standard Method B and did not detect any visible detachment.

Finally, the electrical resistance was measured, finding a value of 1 mQ/sq.

For control purposes, the plating step was carried out on a PEEK specimen (without graphene-based filler) which was processed and cleaned according to the same protocol, and the absence of any copper deposition was verified.

This confirms that the percolating conductive network provided by the 23 wt% FLG is the enabling factor.

From the foregoing description it is apparent that the combination of PEEK with the graphene-based filler according to the invention leads to intrinsically conductive substrates (7-30 Q/sq), on which direct galvanic copper plating (or other type of electrodeposition) can be carried out with uniform deposit, excellent adhesion and electrical properties completely comparable to metallic substrates.

The absence of preparatory plasma treatments or other forms of complex surface activations represents a technical and economic advantage that allows expensive and time-consuming steps to be eliminated, thus simplifying the production chain.

In terms of environmental advantages, the solution based on the conductive doping in the entire volume of the substrate significantly reduces the dependence on the toxic chromic acid or on large amounts of heavy metal catalysts, such as palladium. The traditional electroless plating often involves the use of strong oxidizing agents which not only degrade the polymer surface, but also generate hazardous effluents. The disposal of such chemical waste is highly regulated and can be extremely expensive. On the contrary, eliminating or drastically reducing these steps in the process chain means that manufacturers can reduce their ecological impact and meet increasingly stringent environmental regulations around the world. This simpler, more eco-friendly route also makes sense from the economic point of view: fewer chemical baths result into reduced labour, shorter processing cycles, lower disposal costs, and an overall leaner supply chain.

Another essential advantage lies in the versatility of the approach. The invention not only supports the simple galvanization, but also allows for hybrid or subsequent processes once a conductive base has been established. If a specific application requires extremely thick or highly specialized coatings, such as thermal barrier layers, antifouling surfaces, or radio frequency shieldings, the solution presented can integrate thermal spraying, cold spraying, or additional growth and finishing steps (such as chemical nickel-phosphorus for wear resistance or passivation for corrosion protection) on the initially plated layer. Such a two-step strategy exploits the best of both worlds: the doping-based approach ensures a stable substrate for metal deposition, while the subsequent method can adapt the final properties to unique performance requirements.

Furthermore, the doping solution perfectly adapts to several industrial sectors. In the space and aerospace sectors, doping and metallizing PAEK-based components contribute to replacing traditionally heavier aluminum or titanium parts, offering a potential saving of mass without sacrificing the conductivity needed for grounding or protection from charged particles or lightning.

In the automotive sector, decorative metallic finishes can be provided to interior or exterior plastic parts in a more cost-effective and less environmentally harmful manner, while making the advanced EMI or RF shielding accessible to electronic modules.

In consumer electronics, this approach promotes the production of light polymeric housings with robust metallic surfaces for heat diffusion or electromagnetic compatibility, reducing the overall weight of the device.

In biomedical implants, doping-based metallization paves the way for the application of titanium, hydroxyapatite, or even silver-containing coatings on high-performance medical-grade polymers, such as PEEK, improving biocompatibility, antibacterial properties, or bone integration. In the meantime, in marine or offshore structures, the doping in addition to a copper-based plating can produce antifouling surfaces, retarding marine growth on polymeric buoys, ropes, or hull sections. The field of application is broad and constantly expanding, since markets converge towards lightness, functional integration, and environmental responsibility.

In addition to these sector-specific advantages, the possibility of doping filaments for additive manufacturing is particularly interesting for prototyping and small-volume manufacturing, where 3D-printed parts can be immediately plated without multi-step cleaning or chemical activation. This is a promising capability for rapidly iterating the design of light casings, drone frames, or even embedded electronics, bypassing the complexities related to older plating technologies. Equally important is the fact that the doping approach does not require vacuum chambers or extensive pretreatment to achieve the base conductive layer, unlike PVD or sputtering, which are typically limited by line-of-sight deposition constraints and the need for specialized equipment.

Therefore, the proposed invention, which consists in doping the polymeric matrix with graphene- and/or carbon nanotubes-based fillers to produce a fully conductive substrate, introduces multiple advantages: (i) it reduces hazardous chemicals and shortens the supply chain, thereby improving environmental compliance and cost-effectiveness; (ii) it further enables uniform coverage and robust adhesion, even for large or complex shapes, increasing product reliability; (iii) it supports a broad selection of high-performance polymers, offering engineers unprecedented design freedom in applications requiring both the advantages of polymers (lightness, corrosion resistance, ease of molding) and the functionality of metals (electrical conductivity, thermal management, protective coatings).

## Claims

1. A metallization method for polymeric substrates, comprising: (i) a mixing step, in which a polymeric compound is mixed with a graphene- and/or carbon nanotubes-based filler to obtain a conductive polymeric material comprising from 1 to 40% by weight of said graphene- and/or carbon nanotubes-based filler; (ii) a forming step, in which said conductive polymeric material is molded into a shape of the polymeric substrate to be metallized; (iii) a plating step, in which said conductive polymeric substrate is subjected to electrochemical deposition or chemical plating.

2. The metallization method according to claim 1, **characterized in that** said mixing step comprises an operation selected from the group consisting of melt compounding, solution mixing, and ultrasonic mixing.

3. The metallization method according to claim 1 or 2, **characterized in that** said forming step comprises an operation selected from the group consisting of injection molding, extrusion, and 3D printing.

4. The metallization method according to one of the preceding claims, **characterized in that** the graphene- and/or carbon nanotubes-based filler is selected from the group consisting of one- to few-layer graphene (FLG), graphite/graphene nanoplatelets (GNPs), reduced graphene oxide (rGO), and single-wall (SWCNTs) and multi-wall (MWCNTs) carbon nanotubes.

5. The metallization method according to one of the preceding claims, **characterized in that** the graphene-based filler has lateral dimensions between 0.5 and 100 µm and thicknesses between 1 and 10 atomic layers for FLG, and up to 100 nm for GNP.

6. The metallization method according to one of claims 1-4, **characterized in that** the carbon nanotubes-based filler has lengths between 0.5 and 200 µm.

7. The metallization method according to one of the preceding claims, **characterized in that** the polymeric material is selected from the group consisting of acrylonitrile-butadiene-styrene (ABS), polycarbonate (PC), polyamides (PA), polyether ether ketone (PEEK) and polyarylether ketones (PAEK), polyetherimide (PEI).

8. The metallization method according to one of the preceding claims, **characterized in that** it comprises a pretreatment step interposed between said forming step and said plating step; said pretreatment step comprising an operation selected from the group consisting of mechanical cleaning, solvent rinsing, and water rinsing.

9. The metallization method according to one of the preceding claims, **characterized in that** it comprises a post-plating treatment step comprising an operation selected from the group consisting of thermal or cold spray coatings, electropolishing, passivation.
